(19) Europäisches Patentamt

European Patent Office

Office européen des brevets

(11) **EP 1 520 758 A1**

(12) **EUROPEAN PATENT APPLICATION**
published in accordance with Art. 158(3) EPC

(43) Date of publication:
06.04.2005 Bulletin 2005/14

(51) Int Cl.⁷: **B60R 25/10**, B60R 25/04, B62H 5/20

(21) Application number: 03738689.3

(22) Date of filing: 08.07.2003

(86) International application number:
PCT/JP2003/008645

(87) International publication number:
WO 2004/005087 (15.01.2004 Gazette 2004/03)

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 08.07.2002 JP 2002199235
09.08.2002 JP 2002233921
09.08.2002 JP 2002233891
22.10.2002 JP 2002307243

(71) Applicant: **Kabushiki Kaisha MORIC**
Shuchi-gun, Shizuoka 437-0292 (JP)

(72) Inventor: **Maeda, Mitsuaki**
Shuchi-gun, Shizuoka 437-0292 (JP)

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **VEHICLE ROBBERY PREVENTION METHOD AND DEVICE**

(57) This invention provides a theft prevention method and device for a vehicle in which before a battery voltage falls to the extent that releasing of a theft prevention system is impossible, the battery voltage is read and a warning is issued of a drop in the battery voltage so that a user is allowed to take measures such as replacement or charging of the battery and the system can be released without trouble for the start of the engine at the time of driving.

A theft prevention method for a vehicle, allowing that a main switch 5 connected to a battery 6 is turned on to actuate theft prevention means 8, 9, 10 and operation of the theft prevention means is stopped through releasing operation, wherein a battery voltage is read immediately after the main switch 5 is turned on, it is determined whether or not the battery voltage is no larger than a given value after the releasing operation, and a warning is issued if the battery voltage is no larger than the given value.

**FIG. 1**

## Description

Technical Field

This invention relates to a theft prevention method and device for a vehicle such as a motorcycle.

Background Art

As a theft prevention device for a vehicle, there has been known a system in which a sensor is provided for detecting change in posture of the vehicle in parking or its vibration and a warning sound is generated with a siren or a buzzer when the sensor detects the vibration and the like, or a system or the like having an immobilizing function by which an ignition unit made up of an ignition circuit and ignition plugs is cut off so that the engine is prevented from operating when the main switch of the vehicle is operated incorrectly.

In such a theft prevention device, when the main switch is turned off, a theft prevention system made up of a sensor and a microcomputer or a control circuit such as a CPU is automatically set in a warning condition in which the device is operational for theft or mischievous action.

If the main switch is operated incorrectly in this condition (in the case of switching operation with a wrong key or other tools, or in the case where no system releasing operation is performed even when the switch is operated using a normal key), when the main switch is turned on, the system is actuated, generating a warning sound, and an immobilizer is actuated, cutting off an ignition unit and preventing engine start.

As a result, an alarm is sounded against theft or mischievous action to a vehicle, and the immobilizer is actuated, preventing engine start, so that theft prevention is effected and mischievous action can be suppressed.

In such a theft prevention system, a battery is connected to the system through a main switch. When the main switch is turned ON, a source voltage is inputted to the system. Then, system releasing operation is performed to achieve a warning cancellation condition in which the warning sound and operation of the immobilizer are stopped, and thereafter the engine is started for the running of the vehicle.

As a result, when a normal user uses the vehicle normally, the engine can be started for the driving without need of generating a warning sound and without need of cutting off the ignition unit by the immobilizer.

However, when the main switch is turned ON in a condition in which the battery voltage is low at the beginning of use of the vehicle, the immobilizer is not released in spite of the system releasing operation, resulting in a condition of incorrect operation in which the immobilizer is actuated, the ignition unit is cut off and the engine is prevented from starting.

Also, as a theft prevention device for a vehicle, there has been known a system in which a sensor is provided for detecting tilt change of the vehicle in parking, and a warning sound is generated with a siren or a buzzer if the sensor detects any tilt change, or a system or the like having an immobilizing function by which when a main switch is operated incorrectly, an engine ignition unit made up of an ignition circuit and ignition plugs is cut off so that the engine is prevented from operating.

Hitherto, a mercury switch has been used as a sensor for detecting the tilt of the vehicle. The mercury switch is one in which a mercury contact main unit is contained in a glass pipe and the contact main unit is moved by the inclination of the glass pipe so that a contact terminal is set to be on/off.

However, in such a mercury switch, vibration of the vehicle or the like causes on-off repetition of the contact, or the tilt angle of the vehicle in parking causes change in the operation range of the contact, resulting in a possible malfunction of the warning device.

On the other hand, an acceleration sensor for detecting the tilt due to gravity or the vibration due to impact and the like, has been put in practical use. The acceleration sensor is one in which a moving pole plate is provided between two fixed pole plates and when the tilt or the impact causes movement of the moving pole plate, the condenser capacity between the fixed pole plates and the moving pole plate changes so that the gravity acceleration component due to tilt or the impact acceleration is detected. It is possible that the tilt of two axes in the lateral direction (direction of the X-axis) and the longitudinal direction (direction of the Y-axis) is detected with such an acceleration sensor, for the determination of theft.

When this kind of acceleration sensor is used, the tilt or the vibration of the vehicle in the directions of the X- and Y-axis is detected from the sensor output, for the determination of the tilt or the vibrating condition. In this case, point 0 of the sensor output represents an output for a posture of the vehicle (for example, horizontal posture) during normal parking.

However, when the vehicle is parked with its main unit tilted, a certain amount of sensor output is detected from the beginning, raising a possibility of misdetermination at the time of posture change or a possibility of being prevented from detecting minute tilt change exactly. Therefore, a disadvantage arises that reliability of the function of theft prevention is lowered and a false warning is issued, or on the contrary the theft prevention device fails to operate at the time of theft.

Also, a false warning might be issued even in the same posture because of change in the output of the sensor, depending on the temperature property of the acceleration sensor, the temperature change during use, or a long parking time.

Also, if determination of a theft condition is made using a dual-axis acceleration sensor, when an impact is applied during tilt detection, it might be misdetermined that the vehicle is tilted, or a malfunction might be produced that a theft warning is issued as a result of detection of a slight impact.

Further, as a theft prevention device for a vehicle, there have been known an immobilizer for checking an ID code of a transponder incorporated in a key and controlling prohibition of engine start and removal of the prohibition, and an alarm device made up of a sensor for detecting a theft condition, such as a tilt sensor, and a warning device such as a siren.

If a vehicle is first equipped with one of the foregoing immobilizer device and alarm device and at a later time with the other additionally, the two theft prevention devices are actuated separately, so that troublesome separate canceling operation is required when a legitimate user drives the vehicle. Regarding the additionally equipped theft prevention device, it will be convenient if operation of the formerly equipped theft prevention device allows common operation such as setting of the warning condition and warning or mutually available operation.

In view of the foregoing prior art, an object of this invention is to provide a theft prevention method and device for a vehicle in which before a battery voltage falls to the extent that releasing of a theft prevention system is impossible, the battery voltage is read and a warning is issued of a drop in the battery voltage so that a user is allowed to take measures such as replacement or charging of the battery and the system can be released without trouble for the start of the engine at the time of driving.

In addition, another object of this invention is to provide a theft prevention method for a motorcycle capable of detecting the vibration and tilt angle exactly at all times.

Further, another object of this invention is to provide a theft prevention device for a motorcycle in which a false warning due to erroneous detection of the tilt condition caused by a slight vibration or the like can be prevented and a theft condition caused by a large vibration is detected reliably so that reliability of tilt and vibration detection is enhanced.

Further, another object of this invention is to provide a theft prevention system for a vehicle in which when the vehicle is equipped with two separate theft prevention devices of an immobilizer device and an alarm device, operation of one theft prevention device allows the other theft prevention device to be actuated.

Disclosure of the Invention

In order to achieve the foregoing object, this invention provides a theft prevention method for a vehicle, allowing that a main switch connected to a battery is turned on to actuate theft prevention means and operation of the theft prevention means is stopped through releasing operation, in which a battery voltage is read immediately after the main switch is turned on, it is determined whether or not the battery voltage is no larger than a given value after the releasing operation, and a warning is issued if the battery voltage is no larger than the given value.

In this arrangement, in the condition immediately after the main switch is on, that is, in the condition in which a week load is applied such as an indicator lamp for the main switch-ON or lamps for other measuring instruments but not a large load such as a starter, the battery voltage is detected and read, and after releasing operation of the theft prevention device, a warning is issued if the battery voltage is no larger than a given value. Therefore, the fact can be informed to a user before engine start that the battery voltage is low, so that the user is able to take measures such as charging or replacement of the battery. As a result, the engine can be started without trouble and a sufficiently high battery voltage is available at the time of next driving, so that releasing operation of the theft prevention device such as an immobilizer is performed after the main switch-ON and the engine can be started without trouble.

In this case, the battery voltage, if measured in the non-load condition, takes a high measurement value approximately equal to a rated value even when it is low and no residual is left, preventing exact measurement of the voltage. On the contrary, if measured in a condition in which a large load is applied, a voltage drop is too large and exact measurement of the battery voltage is prevented also in this case. In this invention, the battery voltage is read in a condition in which a week load is applied immediately after the main switch is turned on. Therefore, the voltage is measured neither in the non-load condition nor an excessively large load condition, but in a condition in which an appropriate load is applied, so that an exact battery voltage can be read.

In a preferred arrangement, this invention is characterized in that the theft prevention means is an immobilizer system for cutting off an ignition unit when the main switch is operated incorrectly.

In this arrangement, in the theft prevention device with an immobilizer system, an exact battery voltage is read, and if the voltage is lower than a given value, a warning is issued and the fact can be informed to a user. As a result, the user is able to raise the battery voltage through charging or replacement of the battery and prevent in advance failure in releasing the immobilizer due to lack of the voltage. In this case, if a voltage is left large enough to release the immobilizer, the immobilizer is released and the engine can be started by pushing or kick starting in spite of lack of the voltage to drive the starter.

In a preferred arrangement, this invention is characterized in that the given value is a lowest working voltage allowing release of the immobilizer system plus a given margin.

In this arrangement, a warning is issued before the battery voltage is lowered to a minimum value required to release the immobilizer, so that inability to start the engine due to failure in releasing the immobilizer, can be prevented in advance.

In another preferred arrangement, this invention is characterized in that the given value is a lowest working voltage of a starter motor plus a given margin.

In this arrangement, a warning is issued before the battery voltage is lowered to a working voltage of the starter motor higher than the releasing voltage of the immobilizer, so that a user is able to recognize this condition and take measures of raising the battery voltage. Therefore, inability to start an engine because of failure in driving the starter motor due to lack of the battery voltage, can be prevented in advance.

This invention provides, as a theft prevention device for a vehicle for carrying out the foregoing method of the present invention, a theft prevention device for a vehicle having: a theft prevention device main unit connected to a battery through a main switch; a siren for generating a warning sound; an indicator lamp for indicating the operating condition of the theft prevention device; an ignition unit of an engine; means for measuring a battery voltage; main switch-input determination means for determining ON/OFF of the main switch; and a control circuit constituting an immobilizer for controlling the operation of the siren in response to the determination by the main switch-input determination means and stopping operation of the ignition unit, in which the control circuit is arranged such that a battery voltage is read immediately after the main switch is turned on, it is determined whether or not the battery voltage is no larger than a given value after releasing operation of the immobilizer system, and if the voltage is no larger than the given value, a warning is issued from the siren.

In this arrangement, in a condition immediately after the main switch is turned on, that is, in a condition in which a week load is applied such as an indicator lamp for the main switch-ON or lamps for other measuring instruments but not a large load such as a starter, a battery voltage is measured and read, and after releasing operation of the immobilizer system, a warning is issued if the battery voltage is no larger than a given value. Therefore, the fact can be informed to a user before engine start that the battery voltage is low, so that the user is able to take measures such as charging or replacement of the battery. As a result, the engine can be started without trouble and a sufficiently large battery voltage is available at the time of next driving, so that releasing operation of the immobilizer system is performed after the main switch-ON and the engine can be started without trouble.

Also, in order to achieve the foregoing object, this invention provides a theft prevention method for a motorcycle, using an acceleration sensor for detecting the acceleration in the direction of the X- and/or Y-axis, and determining a theft condition based on differences between sensor outputs X, Y in the directions of X, Y and given reference values Xs, Ys, in which an average value of the sensor outputs is calculated for a given time B from the moment when a given time A has elapsed since the start of a new theft monitoring condition, and the average value is set as the reference value.

In this arrangement, after the start of a new theft monitoring condition, that is, when the main switch is turned off or when a warning is cancelled a given time after an alarm is sounded, and after a warning condition is set by the theft prevention device, sensor outputs are detected for a given time B from the moment when a given time A has elapsed with the output stabilized since the start of the warning condition, for the determination of the average value, and a determination of a theft condition is made using the average value as a reference value. Therefore, the reference value is calculated in a stable condition each time the warning condition is started, and the sensor output is determined with the reference value as an initial value for point 0 of the sensor output, so that even if the posture of the vehicle changes at each time of the parking, the point 0 is offset in response to the posture change, thereby providing exact detection of the tilt angle or vibration at all times.

In a preferred arrangement, this invention is characterized in that the sensor output is detected at certain periodic intervals, a given number of data pieces detected before an elapse of the given time A are ignored, an average value of a given number of subsequent detection data pieces is set as the reference value, and a theft condition is determined, using the reference value, based on the subsequent detection data.

In this arrangement, the sensor output is read every some ten ms without need of continuous reading and stored in a memory, thereby effecting reduction in power consumption.

In this case, a given number of reading data pieces detected after the start of the reading are ignored because of lack of stability in the output and not used in calculation of the reference value or tilt determination, and a given number of first reading data pieces detected in a subsequent stable condition are averaged to obtain a reference value. Therefore, a stable and reliable reference value is obtained in response to the vehicle posture at all times and portion of the sensor output due to the vehicle posture can be canceled, based on the reference value, thereby providing a correct and reliable theft determination at all times.

In another preferred arrangement, this invention is characterized in that a theft condition is determined; based on $|X-Xs|+|Y-Ys|$.

In this arrangement, absolute values of the differences between sensor outputs X, Y and reference values Xs, Ys are added together to form a discriminant for the theft condition. Therefore, the discriminant can be calculated in a short time with simple calculation processing and processing speed of the theft determination can be accelerated.

In another preferred arrangement, this invention is characterized in that the reference value is updated at certain time intervals.

In this arrangement, even if the sensor output property changes due to temperature change or the like, the reference value is updated periodically in response to the changes; thereby providing a correct determination of a theft condition based on the sensor output at all times.

Further, this invention provides a theft prevention device for a motorcycle having: a dual-axis acceleration sensor for detecting an acceleration for each of the X- and Y-axis; sensor-output reading means for reading the output of the acceleration sensor; theft determination means for determining, based on the read sensor output, whether or not there exists a theft condition; and warning means for issuing a warning when it is determined that there exists a theft condition, in which the theft determination means calculates a resultant operational output value A of sensor outputs of the X- and Y-axis, based on differences between the sensor outputs X, Y of the X- and Y-axis and given reference values Xs, Ys for the respective X- and Y-axes; a theft condition is determined, based on the vibration of the vehicle if the operational output value A is larger than a given threshold value S; and the theft condition is determined, based on the tilt of the vehicle, if the operational output value A is smaller than the given threshold value S.

In this arrangement, taking a tilt condition of the vehicle posture at the time of parking, for example, as a reference value for each of the X- and Y-axis, a resultant operational sensor output value A of sensor outputs of the X- and Y-axis is calculated, based on differences between the sensor outputs and reference values in the directions of X and Y; a theft condition due to vibration is determined when the operational output value A is larger than a given threshold value S; and a theft condition is determined, based on the tilt of the vehicle when the operational output A is smaller than the threshold value S. Therefore, vibration and tilt can be detected separately, so that erroneous determination of the tilt due to small vibration is prevented, with the threshold of the vibration determination raised and the threshold of the tilt determination lowered, and a large vibration is detected reliably, so that reliability of the theft determination can be enhanced,

In a preferred arrangement, this invention is characterized in that if the operational output value A is larger than a given threshold value S, when this condition continues for not less than a given time in total, it is determined that there exist a theft condition, and a warning is issued.

In this arrangement, if the operational output value A based on the reference values is larger than a given threshold value S and a theft determination due to vibration is made, it is determined that there exists a theft condition when a condition above the threshold S continues for no less than a given time in total. Therefore, an instantaneous, short and small impact such as accidental hitting by a foot is not determined to be a theft condition, preventing erroneous warning, and a large and lasting vibration such as, for example, lowering a main stand is detected reliably, providing determination of the theft condition. In this case, "continuing for no less than a given time in total" means that when a vibration wave is repeated and the vibration includes not only a condition above the threshold value S but also a short-term condition below the threshold value S, the amounts of time during which the operational output value is no smaller than the threshold value S, are summed up. If the time during which the operational output value is no larger than the threshold value S, continues for no less than a given time, a vibration detection mode in a condition above the threshold value is canceled.

In another preferred arrangement, this invention is characterized in that when the operational output value A is smaller than a given threshold value S, a new average value of the average value of a plurality of former output values and the calculation value used in the previous determination is detected for each of the X- and Y-axis; a resultant tilt determination value D of sensor outputs of the X- and Y-axis is calculated, based on differences between the new average values and given reference values Xs, Ys; and when the tilt determination value D is not smaller than a given threshold value Q, it is determined that there exists a theft condition, and a warning is issued.

In this arrangement, when the operational output value A is small and a theft condition is determined, based on the tilt, a average value of the average value of a plurality of former sensor outputs and the calculation value used for the previous theft determination is determined for each of the X- and Y-axis, a resultant tilt determination value D of the sensor outputs of the X- and Y-axis is calculated, based on differences between the average values and the reference values, and the theft condition is determined, based on the tilt determination value D. Therefore, averaging of the output data allows improved reading accuracy of the tilt angle and reliable detection of the minute tilt change, and instantaneous short vibration or lasting minute vibration at irregular intervals due to wind and rain is canceled by averaging, preventing erroneous warning.

In still another preferred arrangement, this invention is characterized in that supposing current output values are represented by X, Y and reference values by Xs, Ys for the X- and Y-axis, the operational output value A is expressed as:

$$A=|X-Xs|+|Y-Ys|.$$

In this arrangement, the operational output value A for the determination of a theft condition is the sum of absolute values of the differences between sensor outputs X, Y and reference values Xs, Ys for the X- and Y-axis. Therefore it can be calculated in a short time with simple calculation processing and processing speed of the theft determination can be accelerated.

In still another preferred arrangement, this invention is characterized in that supposing current output values are represented by X, Y and reference values by Xs, Ys for the X- and Y-axis, the operational output value A is expressed as:

$$A=\sqrt{\{|X-Xs|2+|Y-Ys|2\}}.$$

In this arrangement, whatever the mounting direction of the acceleration sensor is, the tilt condition can be detected correctly.

In yet another preferred arrangement, this invention is characterized in that the sensor-output reading means reads the sensor output at certain time intervals and stores it in a memory.

In this arrangement, the sensor output is read, for example, at periodical intervals of some ten ms without continuous reading and stored in a memory, thereby effecting reduction in power consumption.

Further, this invention provides a theft prevention system for a vehicle, in which there are provided a first theft prevention device constituted by an immobilizer for checking an ID code of a transponder incorporated in a key and controlling prohibition of engine start and removal of the prohibition, and a second theft prevention device made up of theft detection means for detecting a theft condition and warning means; communication means is provided between the first and the second theft prevention devices; and an operating signal of one theft prevention device is sent to the other theft prevention device to enable the other theft prevention device to operate.

In this arrangement, when two theft prevention devices of the first theft prevention device (immobilizer device) and the second theft prevention device (alarm device) are provided separately, an operating signal of one of the immobilizer device and the alarm device is sent to the other through communication means provided between these two theft prevention devices and the other device can be actuated by the operating signal, so that operation to actuate the other device is not needed, improving the handling property. The operating signal includes a signal to trigger some operation, a signal to cancel the operation, a signal to drive other devices, and the like.

In a preferred arrangement, this invention is characterized in that the operating signal is a canceling signal of theft preventing operation; engine-start-prohibition canceling signal is sent from the first theft prevention device to the second theft prevention device; and alerting operation of the second theft prevention device is canceled, based on the start-prohibition canceling signal.

In this arrangement, when the fact is confirmed by the checking of an ID of the transponder in the immobilizer that a regular key is used, the immobilizer is released, enabling the engine to be started and this canceling signal is sent to the alarm device to cancel the warning condition of the alarm device, enabling driving of the vehicle without issuing a warning or the like.

In another preferred arrangement, this invention is characterized in that the operating signal is an input detection signal of a main switch.

In this arrangement, ON/OFF of the input to the main switch is detected by one theft prevention device and the detection signal is sent to the other theft prevention device. Therefore, operation can be controlled, based on ON/OFF of the main switch without need of input detection means of the main switch being provided on the other theft prevention device.

In another preferred arrangement, this invention is characterized in that an alerting-operation starting signal is sent from the first theft prevention device to the second theft prevention device a given time after the main switch is turned off.

In this arrangement, an input detection circuit of the main switch is provided on the immobilizer device to detect ON/OFF of the main switch, and the ON/OFF signal is sent to an alarm device a given time after the main switch is turned off. Therefore, without need of operating the alarm device, the alarm device can be set to a warning condition.

Brief Description of Drawings

Fig. 1 is a block diagram of a theft prevention device for a vehicle according to this invention;
Fig. 2 is a flowchart showing operation of the theft prevention device of Fig. 1;
Fig. 3 are block diagrams of the theft prevention device according to this invention;
Fig. 4 is an output waveform diagram of an acceleration sensor;
Fig. 5 is a flowchart of a theft prevention method according to this invention;
Fig. 6 are output waveform diagrams of a dual-axis acceleration sensor according to this invention;
Fig. 7 is an illustration of a vibration detection mode;
Fig. 8 is an illustration of a tilt detection mode;
Fig. 9 is a flowchart of a theft prevention method using an acceleration sensor;
Fig. 10 are block diagrams of the theft prevention device according to this invention;
Fig. 11 is a block diagram of an immobilizer device;
Fig. 12 is a block diagram of an alarm device;
Fig. 13 is a block diagram of the theft prevention system according to this invention;
Fig. 14 is a block diagram of an embodiment of this invention;
Fig. 15 is a flowchart of an embodiment of this invention;
Fig. 16 is a flowchart of another embodiment of this invention; and

Fig. 17 is a flowchart of still another embodiment of this invention.

Best Mode for Carrying Out the Invention

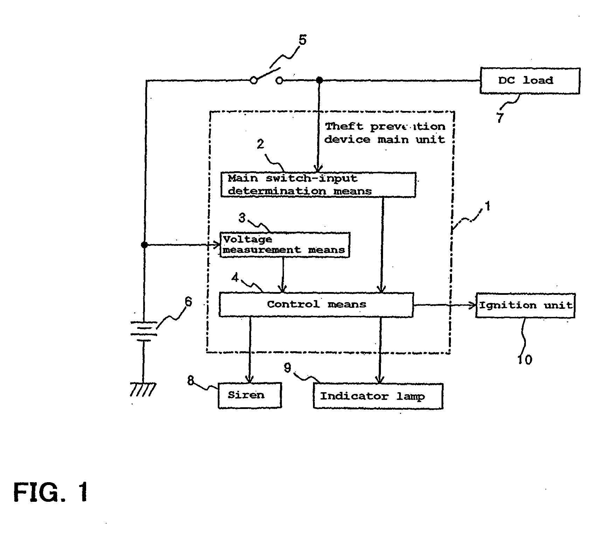

Fig. 1 is a block diagram of a theft prevention device for a vehicle according to this invention.

The theft prevention device has, in a theft prevention device main unit 1, main switch-input determination means 2, voltage measurement means 3 and control means 4. A battery 6 is connected to the main switch-input determination means 2 through a main switch 5. The battery 6 is further connected directly to the voltage measurement means 3. The battery 6 is connected to a DC load 7 such as a starter motor of the vehicle and an indicator lamp through the main switch 5.

A source voltage is supplied to the theft prevention device main unit 1 through the main switch 5. The main switch-input determination means 2 detects the voltage from the battery 6 inputted through the main switch 5 and determines whether the main switch 5 is turned on or off, based on the voltage value.

The voltage measurement means 3 measures the battery voltage directly. In the theft prevention device main unit 1 is provided an acceleration sensor (not shown) for detecting vibration or tilt of the vehicle, connected to the control means 4. The control means 4 is constituted by a theft prevention control circuit (microcomputer or CPU) for controlling operation of the theft prevention system such as alarm generation for the theft prevention or cutting-off of an ignition unit. To the control means 4 are connected a siren 8 for the warning and an indicator lamp 9 for indicating the operating condition of the system. The control means 4 is connected to an ignition unit 10 of the engine. In addition, the control means 4 is provided with an arithmetic circuit (not shown) for determining the condition of abnormal vibration based on the detection signal of an acceleration sensor (not shown) or the like and actuating the siren 8 or the indicator 9 through a drive circuit (not shown).

This control means 4 constitutes an immobilizer system, sets, in advance, a personal identification number on a key (not shown) for the main switch 5 to be turned on/off, checks the personal identification number when the key is inserted, and in the case of a wrong key, cuts off the ignition unit 10 to disable the function of engine starting.

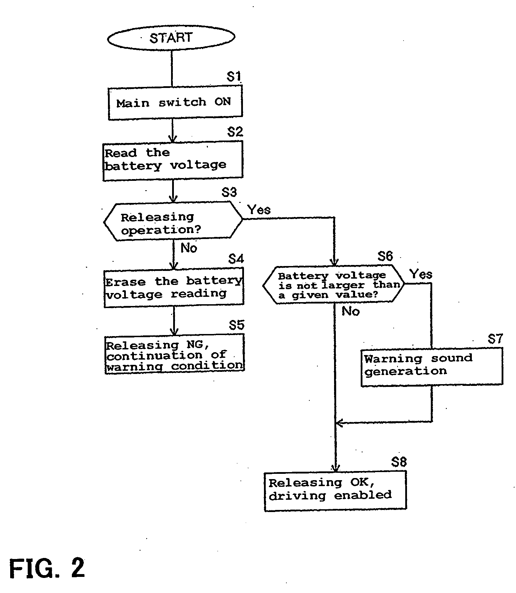

Fig. 2 is a flowchart showing operation of the theft prevention device. The operation at each step in the flow is as follows:

Step S1:

First, the main switch 5 is turned ON. This operation of main switch-ON is detected by the main switch-input determination means 2 and a main switch-ON signal is sent to the control means 4.

Step S2:

Immediately after the main switch-ON, the control means 4 reads the voltage of the battery 6 from the voltage measurement means 3.

Step S3:

It is determined whether or not a releasing operation, for example, by a key is performed to stop the function of the theft prevention device. In the case of normal use, releasing operation is performed. In the case of wrong use, no releasing operation is performed.

Step S4:

When releasing operation is not performed (in the case of wrong use), battery voltage reading data at the step S2 is erased.

Step S5:

The theft prevention device is not released and a warning condition continues. Therefore, a warning sound is generated by the siren 8, the immobilizer works and the ignition unit 10 is cut off, disabling the starting function of the engine.

Step S6:

If releasing operation is performed at the step S3, it is determined whether or not the reading of the battery voltage (at step S2) is smaller than a given value. The given value is a reference by which it is determined whether or not a minimum battery voltage required to actuate the system is left. The reference value is set to 10V, a value with addition of a 25% margin as a safety factor to the lowest working voltage (for example, 8V) required to release, for example, the immobilizer system. Alternately, the reference value may be set to a value near the starting limit voltage for a starter motor higher than the releasing voltage of the immobilizer system, with addition of a certain margin.

Step S7:

If the battery voltage is no larger than a given value at the step S6, a warning sound is generated by the siren. For example, when the voltage is lowered to a required releasing voltage level of the immobilizer system, the siren is sounded a given number of times for the warning to the user.

Step S8:

The theft prevention system such as an immobilizer system is released and driving is enabled.

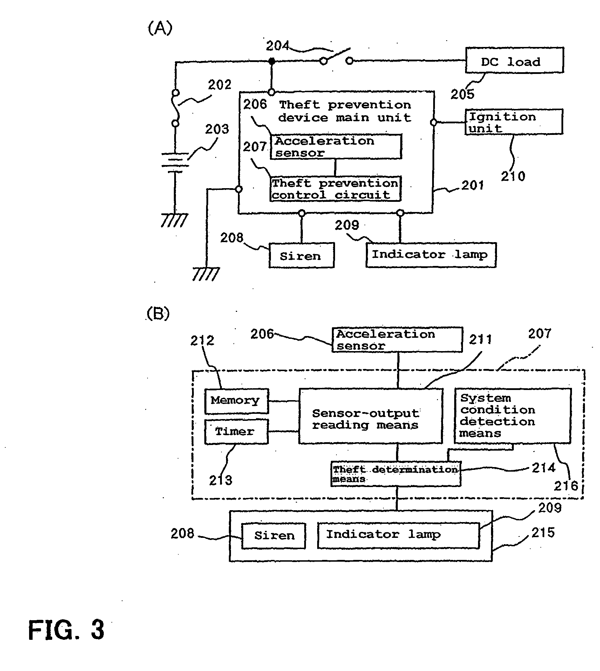

Fig. 3 shows the structure of a theft prevention device according to this invention, (A) is a block diagram of the whole device and (B) is a block diagram of a theft prevention control circuit.

As shown in (A), a battery 203 is connected to a theft prevention device main unit 201 through a fuse 202. The battery 203 is connected to a DC load 205 such as a starter motor of the vehicle or an indicator lamp through a main switch 204. In the theft prevention device main unit 201 are provided an acceleration sensor 206 for detecting vibration and tilt of the vehicle, and a theft prevention control circuit (microcomputer or CPU) 207 for controlling the operation of theft prevention system such as alarm generation for the theft prevention or cutting-off of an ignition unit. To the theft prevention main unit 201 are connected a siren 208 for the warning and an indicator lamp 209 for indicating the operating condition of the system. The theft prevention device main unit 201 is connected to an ignition unit 210 of the engine.

The acceleration sensor 206 is a dual-axis acceleration sensor for detecting the acceleration in the directions of X- and Y- axis to detect the condition of vibration and tilt. The dual-axis acceleration sensor 206 may be a sensor of an integrated structure capable of detection in both X- and Y- direction, or separate X-and Y-direction sensors may be provided, with mounting directions of two single-axis sensors changed from each other, as an acceleration sensor capable of detection in the directions of two axes by the two sensors.

The acceleration sensor 206 is connected to sensor-output reading means 211 included in the theft prevention control circuit 207. A rewritable memory 212 and a timer 213 are connected to the sensor-output reading means 211. The sensor-output reading means 211 reads the detection output of the acceleration sensor 206 at certain periodic intervals (for example, of some ten ms) and the sensor output is stored in the memory 212.

The sensor-output reading means 211 is connected to theft determination means 214. The theft determination means 214 determines a theft condition based on the current system condition by system detection means 216 and the output data from the acceleration sensor 206 read by the sensor-output reading means 211. The system condition detection means 216 determines whether or not theft prevention system by the theft prevention device is in operation in a warning condition.

The theft prevention determination means 214 is connected to a warning device 215 including the sensor 208 and indicator lamp 209, and when a determination of a theft condition is made, it issues a warning and indicates the theft condition with the lamp.

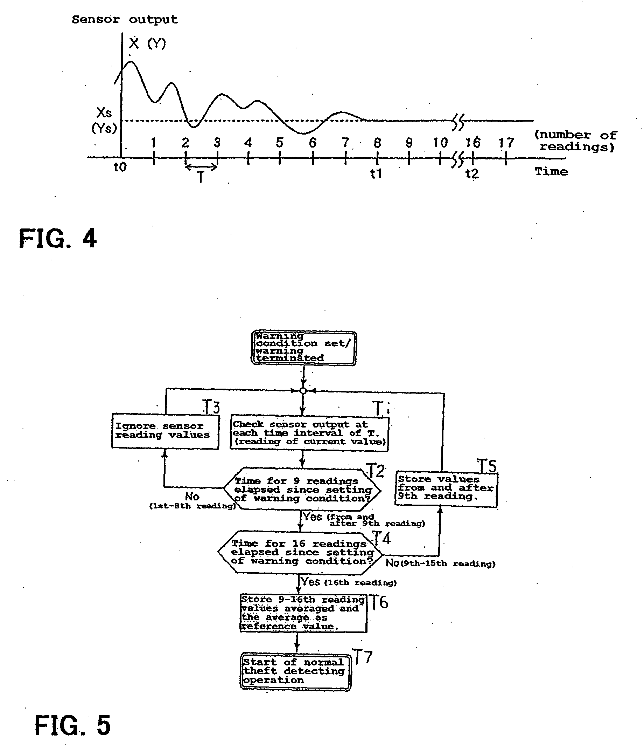

Fig. 4 is an output waveform diagram of an acceleration sensor, in the direction of the X-axis (or Y-axis), according to this invention.

At time t0, the system is set in a new warning condition. The time when the new warning condition is set, is a time when the theft prevention device is reset so as to be in an operational condition, for example, when the main switch is turned off for parking (or when a given time has elapsed since main switch-OFF), or when a warning is automatically canceled a given time after the warning is sounded once.

In this embodiment, the sensor output is read at certain periodic intervals (T), for the determination of a theft condition. In this case, the time from the start (time t0) of the setting of the warning condition to the moment (time t1) of the reading of a given number (in this case, the 8th reading) is a time when the system condition has just been changed (for example, the LED changes its condition from being turned on to being turned off, or the siren from being sounded to being stopped), therefore the reading data will be neglected because of unstable sensor output. The length of time from t0 to t1 corresponds to the given time A of claim 6.

An average is calculated of a given number of reading data pieces (in this case, eight data pieces from the 9th to the 16th reading) from the time t1, to time t2 after an elapse of a given time since, and the average value is stored in a memory as a reference (Xs, Ys) forming point 0 of the sensor output. The length of time from t1 to t2 corresponds to the given time B of claim 6.

A determination of the theft condition is made, based on the reading data of the sensor output from the 17th reading after time t2. Regarding the determination of a theft condition, for example, as described later, a resultant operational output value of sensor outputs in the directions of X- and Y-axis is calculated from read sensor outputs and reference values, and the theft condition is determined in terms of both the vibration and tilt angle of the vehicle, based on whether or not the operational output value exceeds a threshold value.

The reference value (Xs, Ys) may be updated with a new reference value calculated every given time (for example, a few minutes). Therefore, even when the sensor output property changes due to temperature change and the like, the reference value can be updated in response to the changes, thereby providing a correct theft condition determination based on the sensor output at all times.

As a method of updating, in the case of a non-theft, normal condition in which the foregoing output operational value is no larger than the threshold value, the read sensor output and the stored previous reference value are averaged and the average replaces the previous reference value, as a new reference value. Alternatively, a new average value of a given number of reading data pieces is calculated at each given time and this new value may be adopted as a new reference, or the new average value and the stored previous reference value are averaged and this average may replace the previous reference value, as a new reference value.

Fig. 5 is a flowchart of a theft prevention method of this invention.

Step T1:

After a warning condition is set, sensor outputs X, Y are read separately for the X-and Y-axis at regular intervals of T.

Step T2:

It is determined whether or not 8 data pieces are read after the warning condition is set, that is, whether or not the time of the 9th data reading is over.

Step T3:

When the 9th data reading is not reached and the reading data are data pieces of 1st-8th X, Y sensor outputs, these reading data pieces are neglected.

Step T4:

When data pieces from and after the 9th reading are read, a determination is made whether or not a given number of output data pieces (8 pieces) have been read since the 9th reading, that is, whether or not the time has elapsed for 16 readings of the sensor output from the beginning.

Step T5:

During the time of the 9th-15th reading, reading data pieces from and after the 9th reading are stored in the memory.

Step T6:

When sensor outputs from and after the 16th reading are read, an average is calculated of 9-15th sensor outputs stored and the 16th sensor output in combination, and the average is stored in a memory as a reference value.

Step T7:

The sensor output is read at certain periodic intervals (T) for the determination of a theft condition.

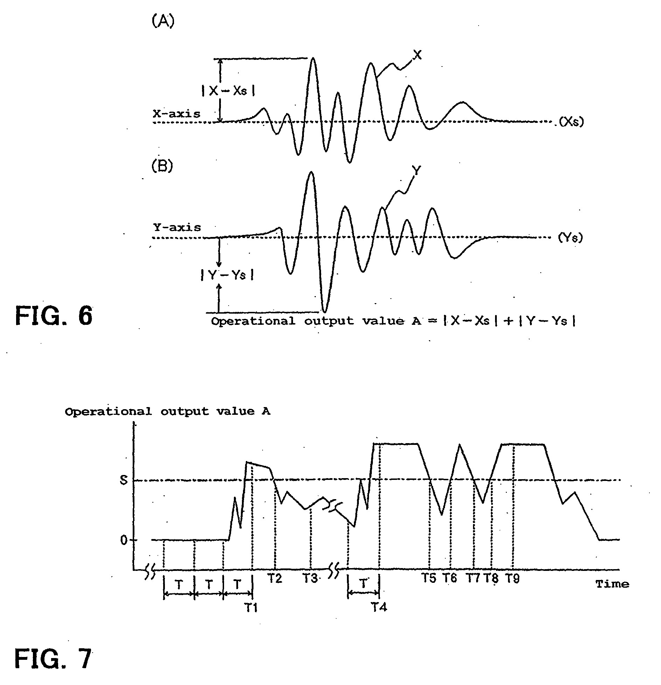

The example of the theft prevention method will be described for determining the theft condition from the sensor output of the dual-axis acceleration sensor by using the reference value above with reference to Figs. 6 through 9.

Fig. 6 are output waveform diagrams of a dual-axis acceleration sensor according this invention, (A) shows an output waveform of an X-axis sensor and (B) an output waveform of a Y-axis sensor.

Sensor outputs X, Y for the X- and Y-axis each depict respective output waveforms shown in the figure depending on the tilt change of the vehicle or the vibration, and the like.

In this embodiment, initial values of sensor outputs X, Y, that is, values of certain output at the time of rest before the waveform appears, are stored as reference values Xs, Ys (dotted lines in the figure). This reference value is one that forms point 0 of the sensor output for the vehicle posture when a main switch is turned off for the parking. The reference value is updated whenever the main switch is turned off for the parking and a warning condition is set, and whenever a warning is issued due to vibration or the like and thereafter the warning is canceled. When the sensor output is detected at certain periodic intervals, several first sensor output data pieces are not used as a reference value because of lack of stability. After a given number of sensor outputs are detected and a stable condition is obtained, a given number of sensor output data pieces are averaged to determine a reference value and the value is stored in a memory.

This reference value may be updated at certain time intervals to correspond to fluctuations in the output value due to temperature change.

When the sensor output reading means 211 (Fig. 3) reads sensor outputs X, Y, differences between these outputs and reference values Xs, Ys, or (X-Xs) and (Y-Ys), are determined.

The sensor output reading means 211 further calculates the sum of absolute values of the differences, or |X-Xs| and |Y-Ys|, as an operational output value A:

$$A=|X-Xs|+|Y-Ys|.$$

The operational output value A is an resultant output value of sensor outputs X, Y for the X- and Y-axis to determine a theft condition, and the theft condition is determined separately from the vibration of the vehicle (in a vibration detection mode) or from the tilt change (in a tilt detection mode), based on the magnitude of the operational output value A.

Fig. 7 is a graph illustrating determination of the theft condition due to vibration. The horizontal axis represents time; the vertical axis, the foregoing operational output value A; and S, a threshold. Time is represented, for example, by ms, and the operational output value A, for example, by mV.

In this embodiment, at a measuring point at each time interval of period T, sensor outputs X, Y are read, which are stored in a memory, and an operational output vale A is calculated from the sensor outputs X, Y read at the present time. If a vibration is applied to the vehicle and the operational output value A exceeds a threshold S at a measuring point of period T, the system transfers to a vibration detection mode from that moment (time T1). In the vibration detection mode, the operational output value A is measured continuously or at very short periodic intervals (for example, of 1 through a few ms) to monitor the vibrating condition.

In this vibration detection mode, when the operational output value A falls below the threshold value S (at time T2) and the moment the condition below the threshold S continues for a given time is reached (at time T3), the vibration detection mode is terminated and the system returns to a normal detection mode (tilt detection mode) in which measurement is made at time intervals of period T. As described above, in a vibrating condition in which the vibration detection mode is canceled in the middle of the operation because of its waveform, it is not determined to be a theft condition because the length of time that the operational output value exceeds the threshold S is short.

In the case where the vibration detection mode is canceled and the system returns to the normal detection mode at the intervals of period T (tilt detection mode), if the operational output value A exceeds the threshold S (at time T4), the system is set in the vibration detection mode again. In this vibration mode, if the length of time that the operational output value A is below the threshold S (time from T5 to T6 and time from T7 to T8) is short and doesn't reach to a given value, the vibration detection mode is continued, and if the total amount of time that the operational output value A is above the threshold S reaches to a given value (at T9), it is determined to be a theft and warning is issued.

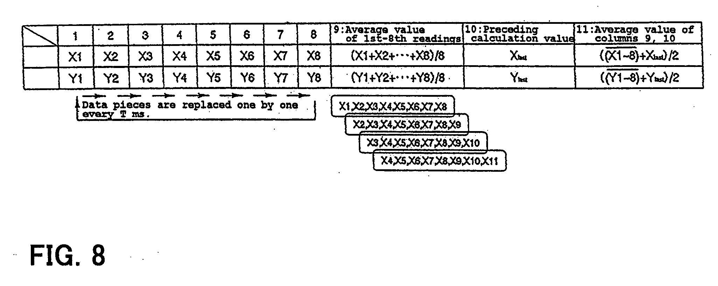

Fig. 8 is an illustration of a tilt detection mode according to this invention. If the operational output value A is below a given threshold value, the sensor output is read at time intervals of period T to be stored in a memory and theft is determined from the tilt change of the vehicle as described below.

For X-and Y-axis sensors, sensor outputs X, Y (in this example, for 8 readings) are stored in a memory, as shown in 1st-8th columns in the figure. The stored sensor output data X1-X8 and Y1-Y8 is updated with a new data whose data pieces are moved up one by one each time new data pieces X9, X10,... and Y9, Y10,... are read at time intervals of period Tms. That is, after a lapse of Tms from the measurement of the 1st-8th reading, the data X2-X9 and Y2-Y9 is stored; after an elapse of next T ms, the data X3-X10 and Y3-Y10 is stored; and likewise, the sensor output data is updated subsequently every Tms.

During a given time from the main switch-off, or during a given time from the moment when an alarm is sounded and thereafter the warning is canceled, no reading of the output data is performed because of lack of stability in the vehicle condition and the sensor output.

In the case where the indicator lamp (LED) changes its indicating condition (for example, from being turned on to being flickered), no reading of the output data is performed for a given number of subsequent measurement because of fluctuations of the source voltage and the sensor output.

Then, the average value of the output data of previous 8 readings is calculated, as shown in the 9th column of Fig. 8. In the 10th column of Fig. 8 are shown calculation values Xlast, Ylast used in the preceding tilt determination. These values Xlast and Ylast are stored in a memory and updated successively. In the 11th column is shown the average value of the average value in the 9th column and the preceding calculation value in the 10th column.

For the first reading, the preceding calculation value of the 10th column is 0. From and after the 2nd reading, data pieces in 1st-8th columns are replaced on by one, and the preceding average value in the 11th column is used as a preceding calculation value of the 10th column.

Next, separately for the X- and Y-axis, differences between the average values in the 11th column and the foregoing reference values Xs, Ys are determined. That is, values of the following expressions are calculated:

$$\{(\Sigma X1\text{-}8)/8+Xlast\}/2\text{-}Xs$$

and

$$\{(\Sigma Y1\text{-}8)/8+Ylast\}/2\text{-}Ys.$$

Next, a value D of the sum of absolute values of these differences for the X- and Y-axis is used, in the theft determination, as an operational output value (tilt determination value) for the tilt detection.

$$D=|\{(\Sigma X1\text{-}8)/8+Xlast\}/2=Xs|.$$

$$+|\{(\Sigma Y1\text{-}8)/8+Ylast\}/2\text{-}Ys|.$$

A threshold value Q of the theft determination level when the operational output value (tilt determination value) D for the tilt determination is set to be smaller than the threshold value S (Fig. 7) of the vibration level to the operational output value A for the vibration detection. Therefore, when a vibration of large acceleration is applied due to an impact or the like during detection of the tilt change, it can be determined in the foregoing vibration detection mode whether or not the vibration is due to a theft, without need of immediate determination. The threshold Q for the tilt determination may be set to be changeable over two or more grades, for the variable sensitivity to the theft detection due to tilt.

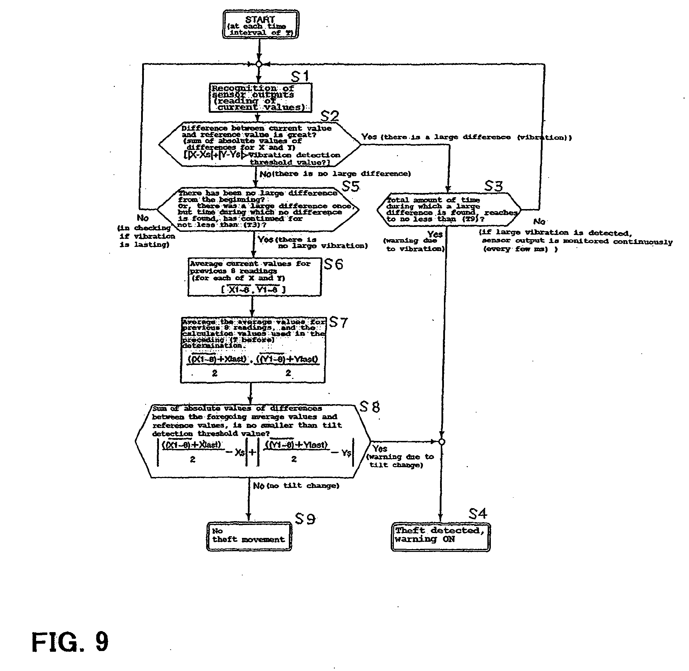

Fig. 9 is a flowchart illustrating operation of the theft prevention device according to this invention.

Step S1:

Current values of sensor outputs X, Y for the X- and Y-axis are read at given periodic intervals (T). This reading operation is started after the main switch is turned off, or after a given time (for example, 1 min) has elapsed from warning cancellation and a stable condition is obtained. The reading data for a given number of readings (for example, 8 readings) after the start of the reading is not used because of lack of stability in the sensor voltage and the sensor output.

The read output data, after being used in calculation of the reference values Xs, Ys as described above, is stored for 8 readings in the memory as described above (Fig. 8). Storage in the memory may be performed when no large vibration occurs at step S5 described later.

Step S2:

It is determined whether or not a large vibration is found in the output waveform. That is, the foregoing operational output value A (Fig. 6) is calculated from the read current output data X, Y, and it is determined whether or not this value is larger than the threshold value S (Fig. 7).

Step S3:

If a large vibration is found at the step S2, the system transfers to the foregoing vibration detection mode, and it is determined whether or not total time of the vibration reached to no less than a given value (T9). If yes, it is determined to be a theft movement due to a large vibration such as lowering of the main stand or the like and a warning is issued (step S4). If no, monitoring in the vibration detection mode is continued without any action until time of the vibration reaches to a given value or time of the condition below the threshold S amounts to no less than a given value and the vibration detection mode is canceled.

Step S4:

This is a condition of which a determination of a theft condition is made and an alarm is sounded with a siren. This warning is automatically canceled after a lapse of a given time (for example, a few sec).

Step S5:

If no large vibration is found at the step S2, it is determined whether or not there has been no large vibration from the beginning (A<S), or whether or not a large vibration occurred once (A>S) and the system transfers to the step S3, where it is determined whether or not time of the condition below the threshold S has continued for no less than a given value (T3). If T3 is not reached, monitoring in the foregoing vibration detection mode is continued until T3 is reached.

Step S6:

If no large vibration is found at the step S5, the average value is calculated for each of sensor outputs of the X-and Y-axis for previous eight readings stored in the memory, as described in the 9th column of Fig. 8.

Step S7:

As described in the 11th column of Fig. 8, the average value is determined of an average value for the previous eight readings determined at the step S6 and a calculation value used in the preceding (T before) determination.

Step S8:

As described above (Fig. 8), separately for the X-and Y-axis, differences between average values in the 11th column and the foregoing reference values Xs, Ys are determined, and a value D of the sum of absolute values of these differences for the X- and Y-axis, is used for theft determination, as an operational output value (tilt determination value) for the tilt detection:

$$D=|\{(\Sigma X1 \text{ to } 8)/8+Xlast\}/2-Xs|$$

$$+|\{(1 \text{ to } 8)/8+Ylast\}/2-Ys|.$$

If the tilt determination value D is no smaller than a given threshold value Q, it is determined to be a theft and a warning is issued (step S4). If the tilt determination value D is smaller than the given threshold value Q, it is determined to be a non-theft condition. As described above, the threshold value Q for the tilt determination is lower than the threshold value S for the vibration detection.

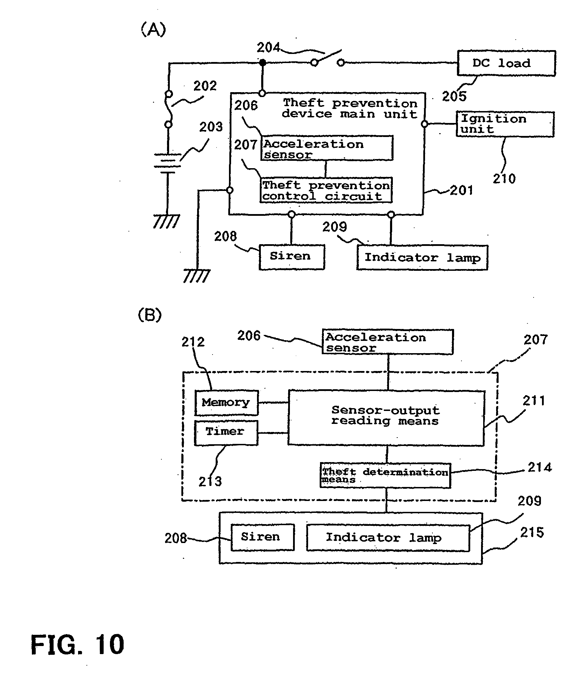

Fig. 10 shows the structure of a theft prevention device according to this invention, (A) is a block diagram of the whole device and (B) is a block diagram of a theft prevention control circuit.

As shown in (A), a battery 203 is connected to a theft prevention device main unit 201 through a fuse 202. The battery 203 is connected to a DC load 205 such as a starter motor of the vehicle or an indicator lamp through a main switch 204. In the theft prevention device main unit 201 are provided an acceleration sensor 206 for detecting vibration and tilt of the vehicle, and a theft prevention control circuit (microcomputer or CPU) 207 for controlling the operation of theft prevention system such as alarm generation for the theft prevention or cutting-off of an ignition unit. To the theft prevention main unit 201 are connected a siren 208 for the warning and an indicator lamp 209 for indicating the operating condition of the system. The theft prevention device main unit 201 is connected to an ignition unit 210 of the engine.

The acceleration sensor 206 is a dual-axis acceleration sensor for detecting the acceleration in the directions of X- and Y- axis to detect the condition of vibration and tilt. The acceleration sensor 206 is connected to sensor-output reading means 211 included in the theft prevention control circuit 207. A rewritable memory 212 and a timer 213 are connected to the sensor-output reading means 211. The sensor-output reading means 211 reads the detection output of the acceleration sensor 206 at certain periodic intervals (for example, of some ten ms) and the sensor output is stored in the memory 212.

The sensor-output reading means 211 is connected to theft determination means 214. The theft determination means 214 determines a theft condition based on the output data from the acceleration sensor 206 read by the sensor-output reading means 211.

The theft prevention determination means 214 is connected to a warning device 215 including the sensor 208 and indicator lamp 209, and when a determination of a theft condition is made, it issues a warning and indicates the theft condition with the lamp.

The theft prevention device of Fig. 10, like the foregoing theft prevention device of Fig. 3, operates based on the theft prevention method described in Fig. 6-Fig. 9.

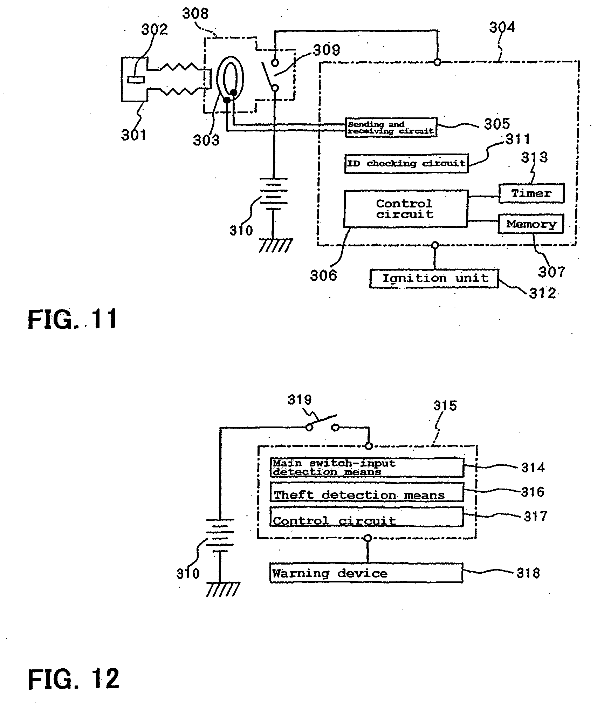

Fig. 11 is block diagram of a theft prevention device with an immobilizer.

A transponder 302 is incorporated in a key 301. An antenna 303 is incorporated in a key cylinder 308 of the vehicle. A main switch 309 is provided in the key cylinder 308 or outside the key cylinder 308. The main switch 309 is connected to a battery 310, which supplies electric power to an immobilizer device 304. The immobilizer device 304 has a sending and receiving circuit 305 connected to the antenna 303, an ID check circuit 311 for checking an ID code sent from the transponder 302, a control circuit 306 for checking the ID code at a given timing and cutting off an ignition unit 312 based on the check result, and a timer 313 and a memory 307 connected to the control circuit 306.

The transponder 302 are made up of an unillustrated solenoid coil, a capacitor, a microchip, and the like, in which is stored a specific ID code for each vehicle. In the memory 307 is registered an ID code the same as that in the transponder 302 in advance by an ID code register (not shown) through the control circuit 306.

When a driver inserts the key 301 into the key cylinder 308 of the vehicle at the time of driving, electric power is supplied to the transponder 302 from the sending and receiving circuit 305 through the antenna 303, for the charging of the transponder 302. When the amount of charge to the transponder 302 reaches to a certain value, a specific ID code stored in the transponder 302 is sent to the immobilizer device 304 through the antenna 303. The immobilizer device 304 receives this ID code signal through the sending and receiving circuit 305. The received ID code is checked by the ID check circuit 311 against an ID code registered in the memory 307, based on a given timing signal sent to the control circuit 306 by the timer 313. In response to the check result, if the ID code in the transponder 302 is in agreement with the ID code in the memory 307, the control circuit 306 enables the ignition unit 312 of the engine to operate through an interface circuit (not shown) to allow the engine to be ready for starting. If these ID codes are not in agreement, it cuts off the ignition unit 312 to prohibit engine start.

Fig. 12 is a block diagram of an alarm device for detecting the theft condition to issue a warning.

The alarm device 315 has a main switch-input detection circuit 314 connected to the battery 310 through the main switch 309, theft detection means 316 constituted by a tilt sensor for detecting a theft condition from vibration and tilt of the vehicle or an acceleration sensor, and a control circuit 318 for setting at a given timing the theft detection means 316 to a warning condition and driving a warning device 317 constituted, for example, by a siren to issue a warning when the theft condition is detected.

The alarm device 315 is automatically set in a warning condition after an elapse of a given time from the moment when driving is terminated and the main switch 309 is turned off. In the case where a legitimate user starts driving, the main switch 309 is turned on and a cancellation signal must be sent to cancel the warning condition of the alarm device 315.

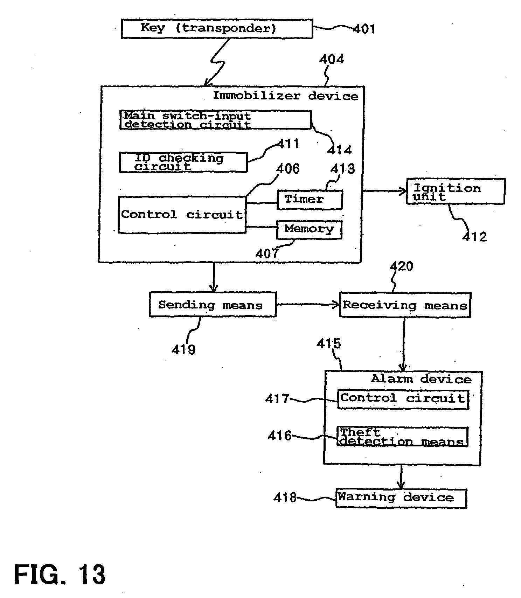

Fig. 13 is a block diagram of a theft prevention system according to this invention.

The theft prevention system comprises an immobilizer device 404 mounted to a motorcycle on its main unit, and an alarm device 415 provided separately. The immobilizer device 404 is provided with a transmitter 419, and the alarm device 415, with a receiver 420. The immobilizer 404 sends various kinds of operating signals and detection signals to the alarm device 415 through the transmitter 419. The alarm device 415 receives signals sent from the immobilizer 404 by the receiver 420, operating based on the signals received.

When a key 401 is inserted into a key cylinder (not shown) of the vehicle, like the previous example (Fig. 11), an ID code of the transponder is sent to the immobilizer device 404 through an antenna in the key cylinder. The immobilizer device 404 has a main switch-input detection circuit 414, an ID check circuit 411, a timer 413, a memory407, and a control circuit 406. The received ID code is checked by the ID check circuit 411 against an ID code registered in the memory 407, based on a given timing signal sent to the control circuit 406 by the timer 413. In response to the check result, if the ID code in the transponder is in agreement with the ID code in the memory 407, the control circuit 406 enables the ignition unit 412 of the engine to operate through an interface circuit (not shown) to allow the engine to be ready for starting. If these ID codes are not in agreement, it cuts off the ignition unit 412 to prohibit engine start.

The alarm device 415 has theft detection means 416 constituted by a tilt sensor for detecting a theft condition from vibration and tilt of the vehicle or an acceleration sensor, and a control circuit 417 for setting at a given timing the theft detection means 416 in a warning condition and driving a warning device 418 constituted, for example, by a siren to issue a warning when the theft condition is detected.

As described above, since communication means made up of sending means 419 and receiving means 420 is provided between the immobilizer device 404 and alarm device 415, the alarm device 415 can be actuated without need of operating the alarm device 415, based on various kinds of operating signals and detection signals of the immobilizer device 404.

The sending means 419 and the receiving means 420 may be sending and receiving means capable of bilateral communication, respectively, which send operating signals to each other to enable the opponent to operate.

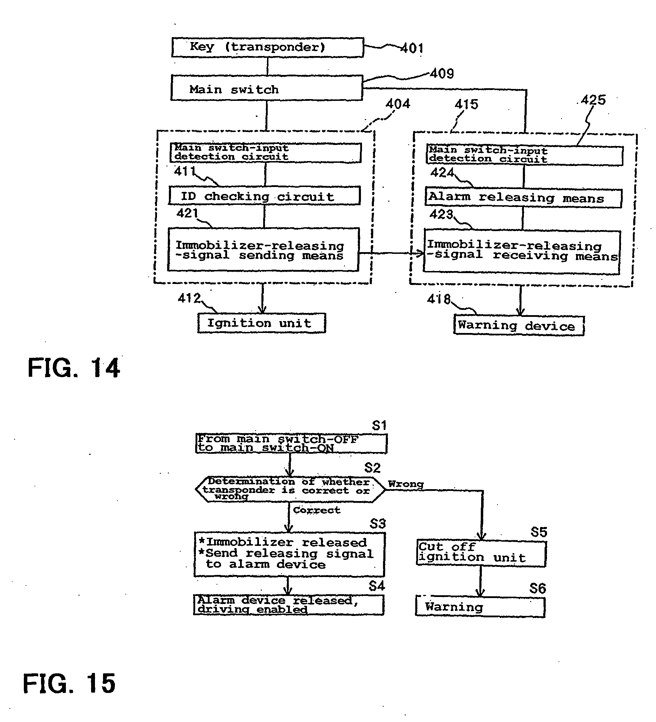

Fig. 14 is a block diagram of another theft prevention system according to this invention.

The key 401 incorporating a transponder actuates a main switch 409, and a battery (not shown) is connected to the immobilizer device 404 through the main switch 409. The immobilizer device 404 has the main switch-input detection circuit 414, and the ID check circuit 411 for checking an ID code of the transponder. The ID check circuit 411 is connected to immobilizer-releasing-signal sending means 421 to send an immobilizer-releasing signal to the alarm device 415.

The alarm device 415 has a main switch-input detection circuit 425 connected to the main switch 409, immobilizer-releasing-signal receiving means 423, and alarm releasing means 424 connected to the immobilizer-releasing-signal receiving means.

Fig. 15 is a flowchart illustrating operation of the embodiment of Fig. 14. The operation at each step is as follows:

Step S1:

At the start of driving, switching-on of the main switch 409 is detected by the main switch-input detection circuit 414 (Fig. 14) of the immobilizer device 404. This allows operation of the immobilizer device 404 to be started. At this time, the alarm device 415 continues the warning condition at the time of the main switch-off.

Step S2:

The ID check circuit 411 determines whether the inserted key is a regular one or a wrong one, or whether or not the main switch is turned on through an incorrect operation.

Step S3:

If it is a regular key, the immobilizer function is canceled and the engine is enabled to be started. The immobilizer-releasing signal is sent to the alarm device 415 through the immobilizer-releasing-signal sending means 421.

Step S4:

On the alarm device 415 in which the immobilizer-releasing signal is received, a warning condition is canceled, based on the immobilizer-releasing signal by the alarm releasing means 424, and driving is enabled.

Step S5:

If a determination of use of a wrong key or incorrect operation, is made at the step S2, immobilizer function is activated to cut off the ignition unit and engine start is prohibited. At this time, because of the immobilizer being in operation, no releasing signal is transmitted, so that no releasing signal is sent to the alarm device 415. Therefore, the alarm device 415 continues the warning condition.

Step S6:

If the alarm device 415 detects a theft movement from vibration or tilt of the vehicle, a warning is issued.

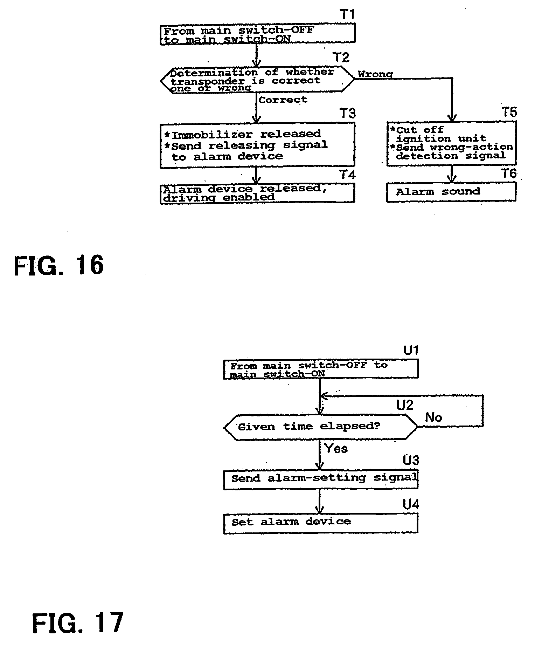

Fig. 16 is a flowchart of another embodiment of this invention.

Operation of this embodiment is the same from step T1 to step T4 as that of the foregoing embodiment at the steps S1-S4 in the flow of Fig. 15. In this embodiment, when use of a wrong key or incorrect operation is detected at step T2, at step T5 the ignition unit is cut off, engine start is prohibited, and the wrong-action detection signal is sent to the alarm device 415 through sending means (immobilizer-releasing-signal sending means 421 of Fig. 14).

The alarm device 415, on receiving the wrong-action detection signal, drives the warning device 418 based on the wrong-action detection signal, and a warning is issued (Step T6).

Fig. 17 is a flowchart of still another embodiment of this invention. This embodiment shows a flow when the alarm device is set.

Step U1:

When the main switch is turned off at the end of driving, this fact is determined from the detection signal of the main switch-input-detection circuit 414 (Fig. 14) of the immobilizer device 404.

Step U2:

It is determined by the control circuit 406 (Fig. 13) of the immobilizer device 404 whether or not a given time has elapsed from main switch-off. If it is earlier than a specified time, the system is kept on standby until the specified time is reached.

Step U3:

When the specified time is reached, an alarm setting signal is sent from the immobilizer device 404 to the alarm device 415.

Step U4:

The alarm device 415 is set the alarm device 415 in a warning condition, based on the received alarm setting signal.

Industrial applicability

In this invention as described above, in the condition immediately after the main switch is on, that is, in the condition in which a week load is applied such as an indicator lamp for the main switch-ON or lamps for other measuring instruments but not a large load such as a starter, the battery voltage is detected and read, and after releasing operation of the theft prevention device, a warning is issued if the battery voltage is no larger than a given value. Therefore, the fact can be informed to a user before engine start that the battery voltage is low, so that the user is able to take measures such as charging or replacement of the battery. As a result, the engine can be started without trouble and a sufficiently high battery voltage is available at the time of next driving, so that releasing operation of the theft prevention device such as an immobilizer is performed after the main switch-ON and the engine can be started without trouble.

In this case, the battery voltage, if measured in the non-load condition, usually takes a high measurement value approximately equal to a rated value even when it is low and no residual is left, preventing exact measurement of the voltage. On the contrary, if measured in a condition in which a large load is applied, a voltage drop is too large and exact measurement of the battery voltage is prevented also in this case. However, in this invention, the battery voltage is read in a condition in which a week load is applied immediately after the main switch is turned on. Therefore, the voltage is measured neither in the non-load condition nor an excessively large load condition, but in a condition in which an appropriate load is applied, so that an exact battery voltage can be read. As described above, an exact battery voltage is read and the condition of lack of the voltage can be informed to a user by warning based on the reading, so that in a theft prevention device with an immobilizer system, the user is able to raise the battery voltage by charging or replacement of the battery, or the like, whereby failure due to lack of the voltage in releasing the immobilizer to enable the engine to be started, is prevented in advance.

Also, in this invention, after the start of a new theft monitoring condition, that is, when the main switch is turned off or when a warning is cancelled a given time after an alarm is sounded, and after a warning condition is set by the theft prevention device, sensor outputs are detected for a given time B from the moment when a given time A has elapsed with the output stabilized since the start of the warning condition, for the determination of the average value, and a determination of a theft condition is made using the average value as a reference value. Therefore, the reference value is calculated in a stable condition each time the warning condition is started, and the sensor output is determined with the reference value as an initial value for point 0 of the sensor output, so that even if the posture of the vehicle changes at each time of the parking, the point 0 is offset in response to the posture change, thereby providing exact detection of the tilt angle or vibration at all times.

Also, the output data of an acceleration sensor is read periodically, thereby effecting reduction in power consumption.

Also, in this invention, taking a tilt condition of the vehicle posture at the time of parking, for example, as a reference value for each of the X- and Y-axis, a resultant operational sensor output value A of sensor outputs of the X- and Y-axis is calculated, based on differences between the sensor outputs and reference values in the directions of X and Y; a theft condition due to vibration is determined when the operational output value A is larger than a given threshold value S; and a theft condition is determined, based on the tilt of the vehicle when the operational output A is smaller than the threshold value S. Therefore, vibration and tilt can be detected separately, so that erroneous determination of the tilt due to small vibration is prevented, with the threshold S of the vibration determination raised and the threshold Q of the tilt determination lowered, and a large vibration is detected reliably, so that reliability of the theft determination can be enhanced, whereby reliability of the theft prevention function is improved and prevention of erroneous warning can be effected.

Also, the output data of an acceleration sensor is read periodically, thereby effecting reduction in power consumption.

Further, in this invention, when two theft prevention devices of the first theft prevention device (immobilizer device) and the second theft prevention device (alarm device) are provided separately, an operating signal of one of the immobilizer device and the alarm device is sent to the other through communication means provided between these two theft prevention devices and the other device can be actuated by the operating signal, so that operation to actuate the other device is not needed, improving the handling property.

As a result, in the case where an alarm device, for example, is attached at a later time, the alarm device can be released by the same operation as that of the immobilizer as a single part, so that releasing means for the alarm device is dispensed with, operation is simplified and cost reduction can be effected.

**Claims**

1. A theft prevention method for a vehicle, allowing that a main switch connected to a battery is turned on to actuate theft prevention means and operation of the theft prevention means is stopped through releasing operation, wherein a battery voltage is read immediately after the main switch is turned on, it is determined whether or not the battery voltage is no larger than a given value after the releasing operation, and a warning is issued if the battery voltage is no larger than the given value.

2. The theft prevention method for a vehicle as set forth in claim 1, wherein the theft prevention means is an immobilizer system for cutting off an ignition unit when the main switch is operated incorrectly.

3. The theft prevention method for a vehicle as set forth in claim 2, wherein the given value is a lowest working voltage allowing release of the immobilizer system plus a given margin.

4. The theft prevention method for a vehicle as set forth in claim 1 or 2, wherein the given value is a lowest working voltage of a starter motor plus a given margin.

5. A theft prevention device for a vehicle having: a theft prevention device main unit connected to a battery through a main switch; a siren for generating a warning sound; an indicator lamp for indicating the operating condition of the theft prevention device; an ignition unit of an engine; means for measuring a battery voltage; main switch-input determination means for determining ON/OFF of the main switch; and a control circuit constituting an immobilizer for controlling the operation of the siren in response to the determination by the main switch-input determination means and stopping operation of the ignition unit, wherein the control circuit is arranged such that a battery voltage is read immediately after the main switch is turned on, it is determined whether or not the battery voltage is no larger than a given value after releasing operation of the immobilizer system, and if the voltage is no larger than the given value, a warning is issued from the siren.

6. A theft prevention method for a motorcycle, using an acceleration sensor for detecting the acceleration in the direction of the X- and/or Y-axis, and determining a theft condition based on differences between sensor outputs X, Y in the directions of X, Y and given reference values Xs, Ys, wherein an average value of the sensor outputs is calculated for a given time B from the moment when a given time A has elapsed since the start of a new theft monitoring condition, and the average value is set as the reference value.

7. The theft prevention method for a motorcycle as set forth in claim 6, wherein the sensor output is detected at certain periodic intervals, a given number of data pieces detected before an elapse of the given time A are ignored, an average value of a given number of subsequent detection data pieces is set as the reference value, and a theft condition is determined, using the reference value, based on the subsequent detection data.

8. The theft prevention method for a motorcycle as set forth in claim 6 or 7, wherein a theft condition is determined, based on $|X-Xs|+|Y-Ys|$.

9. The theft prevention method for a motorcycle as set forth in claims 6, 7 or 8, wherein the reference value is updated at certain time intervals.

10. A theft prevention device for a motorcycle having: a dual-axis acceleration sensor for detecting an acceleration for each of the X- and Y-axis; sensor-output reading means for reading the output of the acceleration sensor; theft determination means for determining, based on the read sensor output, whether or not there exists a theft condition; and warning means for issuing a warning when it is determined that there exists a theft condition, the theft determination means calculates a resultant operational output value A of sensor outputs of the X- and Y-axis, based on differences between the sensor outputs X, Y of the X- and Y-axis and given reference values Xs, Ys for the respective X- and Y-axes; a theft condition is determined, based on the vibration of the vehicle, if the operational output value A is larger than a given threshold value S; and the theft condition is determined, based on the tilt of the vehicle, if the operational output value A is smaller than the given threshold value S.

11. The theft prevention device for a motorcycle as set forth in claim 10, wherein if the operational output value A is larger than a given threshold value S, when this condition continues for not less than a given time in total, it is determined that there exist a theft condition, and a warning is issued.

12. The theft prevention device for a motorcycle as set forth in claim 10, wherein when the operational output value A is smaller than a given threshold value S, a new average value of the average value of a plurality of former output values and the calculation value used in the previous determination is detected for each of the X-and Y-axis; a resultant tilt determination value D of sensor outputs of the X- and Y-axis is calculated, based on differences between the new average values and given reference values Xs, Ys; and when the tilt determination value D is not smaller than a given threshold value Q, it is determined that there exists a theft condition, and a warning is issued.

13. The theft prevention device for a motorcycle as set forth in claim 10, wherein supposing current output values are represented by X, Y and reference values by Xs, Ys for the X- and Y-axis, the operational output value A is expressed as:

$$A=|X-Xs|+|Y-Ys|.$$

14. The theft prevention device for a motorcycle as set forth in claim 10, wherein supposing current output values are represented by X, Y and reference values by Xs, Ys for the X- and Y-axis, the operational output value A is expressed as:

$$A=\sqrt{\{|X-Xs|2+|Y-Ys|2\}}.$$

15. The theft prevention device for a motorcycle as set forth in any one of claims 10-14, wherein the sensor-output reading means reads the sensor output at certain time intervals and stores it in a memory.

16. A theft prevention system for a vehicle, wherein there are provided a first theft prevention device constituted by an immobilizer for checking an ID code of a transponder incorporated in a key and controlling prohibition of engine start and removal of the prohibition, and a second theft prevention device made up of theft detection means for detecting a theft condition and warning means; communication means is provided between the first and the second theft prevention devices; and an operating signal of one theft prevention device is sent to the other theft prevention device to enable the other theft prevention device to operate.

17. The theft prevention system for a vehicle as set forth in claim 16, wherein the operating signal is a canceling signal of theft preventing operation; engine-start-prohibition canceling signal is sent from the first theft prevention device to the second theft prevention device; and alerting operation of the second theft prevention device is canceled, based on the start-prohibition canceling signal.

18. The theft prevention system for a vehicle as set forth in claim 16 or 17, wherein the operating signal is an input detection signal of a main switch.

19. The theft prevention system for a vehicle as set forth in claims 16, 17 or 18, wherein an alerting-operation starting signal is sent from the first theft prevention device to the second theft prevention device a given time after the main switch is turned off.

**FIG. 1**

FIG. 2

(A)

(B)

# FIG. 3

**FIG. 4**

**FIG. 5**

(A)

|X−Xs|

X-axis ............................................ (Xs)

(B)

Y-axis ............................................ (Ys)

|Y−Ys|

**FIG. 6**

Operational output value A = |X−Xs| + |Y−Ys|

Operational output value A

**FIG. 7**

| | 1 | 2 | 3 | 4 | 5 | 6 | 7 | 8 | 9:Average value of 1st-8th readings | 10:Preceding calculation value | 11:Average value of columns 9, 10 |
|---|---|---|---|---|---|---|---|---|---|---|---|
| | X1 | X2 | X3 | X4 | X5 | X6 | X7 | X8 | $(X1+X2+\cdots+X8)/8$ | $X_{last}$ | $(\overline{(X1-8)}+X_{last})/2$ |
| | Y1 | Y2 | Y3 | Y4 | Y5 | Y6 | Y7 | Y8 | $(Y1+Y2+\cdots+Y8)/8$ | $Y_{last}$ | $(\overline{(Y1-8)}+Y_{last})/2$ |

Data pieces are replaced one by one every T ms.

X1,X2,X3,X4,X5,X6,X7,X8

X2,X3,X4,X5,X6,X7,X8,X9

X3,X4,X5,X6,X7,X8,X9,X10

X4,X5,X6,X7,X8,X9,X10,X11

**FIG. 8**

22

START
(at each time
interval of T)

S1
Recognition of
sensor outputs
(reading of
current values)

S2
Difference between current value
and reference value is great?
(sum of absolute values of
differences for X and Y)
[|X-Xs|+|Y-Ys|>Vibration detection
threshold value?]

Yes (there is a large difference (vibration))

No (there is no large difference)

S5
There has been no large difference
from the beginning?
Or, there was a large difference once,
but time during which no difference
is found, has continued for
not less than (T3)?

No
(in checking
if vibration
is lasting)

S3
Total amount of time
during which a large
difference is found, reaches
to no less than (T9)?

No
(if large vibration is detected,
sensor output is monitored continuously
(every few ms) )

Yes (there is
no large vibration)

Yes
(warning due
to vibration)

S6
Average current values for
previous 8 readings
(for each of X and Y)
[ $\overline{X1{\sim}8}$ , $\overline{Y1{\sim}8}$ ]

S7
Average the average values for
previous 8 readings, and the
calculation values used in the
preceding (7 before)
determination.

$$\frac{(\overline{X1{\sim}8})+Xlast)}{2} , \frac{(\overline{Y1{\sim}8})+Ylast)}{2}$$

S8
Sum of absolute values of differences
between the foregoing average values and
reference values, is no smaller than tilt
detection threshold value?

$$\left|\frac{(\overline{X1{\sim}8})+Xlast)}{2}-Xs\right|+\left|\frac{(\overline{Y1{\sim}8})+Ylast)}{2}-Ys\right|$$

Yes
(warning due to
tilt change)

No (no tilt change)

S9
No
theft movement

S4
Theft detected,
warning ON

# FIG. 9

(A)

204

DC load

205

202

206  Theft prevention
device main unit

Ignition
unit

203

207 Acceleration
sensor

210

Theft prevention
control circuit

201

208

209

Siren

Indicator lamp

(B)

212

206

Acceleration
sensor

207

Memory

Sensor-output
reading means

211

Timer

213

Theft determination
means

214

209

208

Siren

Indicator lamp

215

FIG. 10

308
302
309
304

Sending and
receiving circuit — 305

ID checking circuit — 311

313

Timer

Control
circuit

Memory

301      303

310

306                    307

Ignition unit

312

**FIG. 11**

319                    315

Main switch-input
detection means — 314

Theft detection means — 316

Control circuit — 317

310

Warning device — 318

**FIG. 12**

FIG. 13

Key (transponder) — 401

Main switch — 409

404    415    425

┌─────────────────────────────┐    ┌─────────────────────────────┐
│ Main switch-input           │    │ Main switch-input           │
│ detection circuit           │    │ detection circuit           │
│   411                       │    │   424                       │
│ ┌─────────────────────────┐ │    │ ┌─────────────────────────┐ │
│ │ ID checking circuit     │ │    │ │ Alarm releasing means   │ │
│ └─────────────────────────┘ │    │ └─────────────────────────┘ │
│   421                       │    │   423                       │
│ ┌─────────────────────────┐ │    │ ┌─────────────────────────┐ │
│ │ Immobilizer-releasing   │─┼────┼→│ Immobilizer-releasing   │ │
│ │ -signal sending means   │ │    │ │ -signal receiving means │ │
│ └─────────────────────────┘ │    │ └─────────────────────────┘ │
└─────────────────────────────┘    └─────────────────────────────┘

412                                 418

┌─────────────────┐                ┌─────────────────┐
│ Ignition unit   │                │ Warning device  │
└─────────────────┘                └─────────────────┘

## FIG. 14

S1
┌─────────────────────────┐
│ From main switch-OFF    │
│ to main switch-ON       │
└─────────────────────────┘

S2
⬡ Determination of whether    Wrong
  transponder is correct or ─────────┐
  wrong ⬡                            │
     │ Correct                       │
     ▼                               ▼
S3                               S5
┌─────────────────────────┐    ┌─────────────────┐
│ *Immobilizer released   │    │ Cut off         │
│ *Send releasing signal  │    │ ignition unit   │
│  to alarm device        │    └─────────────────┘
└─────────────────────────┘             │
     │                                  ▼
     ▼                              S6
S4                               ┌─────────────────┐
┌─────────────────────────┐    │ Warning         │
│ Alarm device released,  │    └─────────────────┘
│ driving enabled         │
└─────────────────────────┘

## FIG. 15

T1
From main switch-OFF to main switch-ON

T2
Determination of whether transponder is correct one or wrong — Wrong

Correct

T3
*Immobilizer released
*Send releasing signal to alarm device

T5
*Cut off ignition unit
*Send wrong-action detection signal

T4
Alarm device released, driving enabled

T6
Alarm sound

FIG. 16

U1
From main switch-OFF to main switch-ON

U2
Given time elapsed? — No

Yes

U3
Send alarm-setting signal

U4
Set alarm device

FIG. 17

## INTERNATIONAL SEARCH REPORT

| | International application No. |
|---|---|
| | PCT/JP03/08645 |

A. CLASSIFICATION OF SUBJECT MATTER
Int.Cl$^7$ B60R25/10, B60R25/04, B62H5/20

According to International Patent Classification (IPC) or to both national classification and IPC

B. FIELDS SEARCHED

Minimum documentation searched (classification system followed by classification symbols)
Int.Cl$^7$ B60R25/00-25/10, E05B1/00-75/00, G08B13/00, B62H5/20

| Documentation searched other than minimum documentation to the extent that such documents are included in the fields searched | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-102862 A (Mazda Motor Corp.), 21 April, 1998 (21.04.98), Full text; Figs. 1 to 18 (Family: none) | 16-19 |
| A | JP 4-221244 A (Fujitsu Ten Ltd.), 11 August, 1992 (11.08.92), Full text; Figs. 1 to 2 (Family: none) | 1-5 |
| A | JP 2002-67882 A (Yamaha Motor Co., Ltd.), 08 March, 2002 (08.03.02), Full text; Figs. 1 to 2 (Family: none) | 6-15 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2003 (06.10.03) | 21 October, 2003 (21.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/08645

| C (Continuation). DOCUMENTS CONSIDERED TO BE RELEVANT | | |
|---|---|---|
| Category* | Citation of document, with indication, where appropriate, of the relevant passages | Relevant to claim No. |
| A | Microfilm of the specification and drawings annexed to the request of Japanese Utility Model Application No. 19593/1989(Laid-open No. 110564/1990) (Diesel Kiki Co., Ltd.), 04 September, 1990 (04.09.90), Full text; Figs. 1 to 8 (Family: none) | 6-15 |
| A | JP 2835537 B2 (Fujitsu Ten Ltd.), 14 December, 1998 (14.12.98), Full text; Figs. 1 to 3 (Family: none) | 6-15 |
| A | JP 2000-348263 A (Katoh Electrical Machinery Co., Ltd.), 15 December, 2000 (15.12.00), Full text; Figs. 1 to 13 (Family: none) | 6-15 |
| A | JP 2001-106029 A (Kenwood Corp.), 17 April, 2001 (17.04.01), Full text; Figs. 1 to 8 (Family: none) | 6-15 |
| A | JP 61-93967 A (Mitsubishi Electric Corp.), 12 May, 1986 (12.05.86), Full text; Figs. 1 to 5 (Family: none) | 1-5 |

Form PCT/ISA/210 (continuation of second sheet) (July 1998)

EP 1 520 758 A1

## INTERNATIONAL SEARCH REPORT

International application No.

PCT/JP03/08645

**Box I   Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:
   There is no special technical feature common to the four groups of inventions of claims 1-5, claims 6-9, claims 10-15, and claims 16-19 within the meaning of PCT Rule 13.2, second sentence.
   There is no other common feature which can be considered to be a special technical feature within the meaning of PCT Rule 13.2, second sentence.
   Accordingly, there is no technical relationship between the aforementioned four groups of inventions within the meaning of PCT rule 13.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

   ☒   No protest accompanied the payment of additional search fees.

Form PCT/ISA/210 (continuation of first sheet (1)) (July 1998)

31